# EUROPÄISCHE PATENTSCHRIFT

(11) **EP 1 703 608 B1**
(45) Veröffentlichungstag und Bekanntmachung des Hinweises auf die Patenterteilung: **14.11.2007**
(21) Anmeldenummer: 06005031.7
(22) Anmeldetag: 13.03.2006
(51) Int. Cl.: H02G 3/18, H01R 13/74, H04M 1/02

(54) **Abdeckung einer Anschlussvorrichtung**
Cover for junction device
Enjoliveur pour un dispositif de raccordement

(30) Priorität: 17.03.2005 DE 102005012332
(43) Veröffentlichungstag der Anmeldung: 20.09.2006
(73) Patentinhaber: LEONI Kabel Holding GmbH & Co. KG, 91154 Roth (DE)
(72) Erfinder: Lamm Fjodor, 52223 Stolberg (DE)
(74) Vertreter: Maxton Langmaack & Partner

(56) Entgegenhaltungen:
- DE-A1- 3 842 205
- DE-A1- 3 930 781
- DE-A1- 19 608 876
- US-B1- 6 616 005

## Beschreibung

Die Erfindung betrifft eine Abdeckung einer Anschlussvorrichtung, insbesondere einer Anschlussdose für eine elektrische oder eine Telekommunikationsinstallation, mit einem Schrägauslass.

Es ist bekannt, derartige Abdeckungen beispielsweise zur Aufnahme von Anschlusselementen bei einer bekannten Hausinstallation für eine Telekommunikationseinrichtung zu verwenden. Je nach Anwendungsfall und Installationsanforderungen werden dafür bislang eine Reihe verschiedener Abdeckungen verwendet.

Ferner sei auf die DE 196 08 876 A1 verwiesen, die die Merkmale des Oberbegriffs nach Anspruch 1 offenbart.

Aufgabe der vorliegenden Erfindung ist es, eine flexiblere Einsatzmöglichkeit einer Abdeckung zu erzielen.

Erfindungsgemäß wird diese Aufgabe durch eine Abdeckung mit dem Merkmalen des Anspruches 1 gelöst. Vorteilhafte Weiterbildungen sind in den jeweiligen abhängigen Ansprüchen angegeben.

Eine erfindungsgemäße Abdeckung einer Anschlussvorrichtung, insbesondere einer Anschlussdose für eine elektrische oder eine Telekommunikationsinstallation, wobei die Abdeckung eine Front- und eine Rückseite umfasst, wenigstens an einem Rand ein Sockelelement bildet, welches in einer Sockelebene liegt, und wenigstens einen Auslass umfasst, der aus wenigstens einer aus der Sockelebene heraustretenden, durchbrochenen Auswölbung der Abdeckung gebildet ist, ist sowohl mit der Front- als auch mit der Rückseite auf der Anschlussvorrichtung, insbesondere einem Tragring und/oder einer Adapterplatte der Anschlussvorrichtung, zumindest mit dem Sockelelement bündig anbringbar. Das Sockelelement ist zumindest am Rand vorzugsweise platten- oder tellerförmig. Eine Grundform des Sockelelementes ist beispielsweise rund, rechteckig, insbesondere quadratisch, dreieckig, achteckig, allgemein polygonal oder allgemein unregelmäßig. Eine Auswölbung ist beispielsweise dachförmig, insbesondere kugelkappenförmig, sphärisch oder allgemein unregelmäßig ausgestaltet.

Zur Bildung eines Auslasses ist die Auswölbung entsprechend durchbrochen. Beispielsweise ergibt sich eine Querschnittsfläche einer Austrittsöffnung als Schnittfläche eines die Auswölbung schräg durchdringenden Quaders. Entsprechend ist die Querschnittsfläche des Schrägauslasses in diesem Fall rechteckig. In anderen Ausgestaltungen kann die Querschnittsfläche entsprechend beispielsweise rund, quadratisch, polygonal, insbesondere dreieckig oder achteckig oder allgemein unregelmäßig sein.

Ein Tragring ist insbesondere in der an sich bekannten Form als Verbindungselement zwischen der Anschlussvorrichtung und der Abdeckung vorgesehen.

Bei der Anschlussvorrichtung handelt es sich beispielsweise um eine Anschlussdose, eine Anschlussvorrichtung eines Schaltschrankes oder eines anderen elektrischen oder Kommunikationsgerätes. Bevorzugt ist die Abdeckung formschlüssig, besonders bevorzugt blickdicht auf der Anschlussvorrichtung anbringbar. Entsprechend einer front- oder rückseitigen Einbaurichtung kann insbesondere eine Einbautiefe verändert werden. Des Weiteren wird bevorzugt eine front- bzw. rückseitige Anschlusskabelführung verändert. Weiter bevorzugt lassen sich insbesondere je nach Einbaulage unterschiedliche Auslassrichtungen realisieren. Besonders bevorzugt sind Front- und Rückseite der Abdeckung sowohl optisch als auch mechanisch gleichwertig. In einer Variante werden Front- und Rückseite insbesondere in unterschiedlichen Farben oder Oberflächenbeschaffenheiten gestaltet. Vorzugsweise werden einem Nutzer insbesondere individuelle Gestaltungsmöglichkeiten bei einem Einbau und einer Integration von Montageeinsätzen, Modulen oder Adaptern geboten.

Als Material einer Abdeckung einer Anschlussvorrichtung ist vorzugsweise ein fester Stoff, insbesondere Kunststoff, Metall oder Holz ausgewählt. Beispielsweise können auch verschiedene Materialien miteinander kombiniert werden.

In einer zweckmäßigen Ausgestaltung liegt die Auswölbung innerhalb eines von einem äußeren Befestigungsrandbereich des Sockelelementes begrenzten Gebietes. Der äußere Befestigungsrandbereich des Sockels bildet dabei beispielsweise einen rechteckigen oder beispielsweise runden Ring. Des Weiteren ist die Auswölbung insbesondere so ausgestaltete, dass sie insbesondere innerhalb einer Aussparung eines Tragringes positioniert ist.

In einer weiteren zweckmäßigen Ausgestaltung umfasst die Abdeckung sowohl auf der Frontseite als auch auf der Rückseite wenigstens eine aus der Sockelebene heraustretende Auswölbung mit jeweils wenigstens einem Auslass. Beispielsweise umfasst die Vorderseite eine pultförmige Auswölbung und die Rückseite eine Kugelkappenförmige Auswölbung. Des weiteren weisen die Auswölbungen beispielsweise unterschiedliche Auslasswinkel auf. Vorzugsweise sind die Auswölbungen gegenüberliegend angeordnet.

In einer anderen Variante sind die Auswölbungen jedoch auch seitlich versetzt angeordnet.

Besonders vorteilhaft ist es, wenn die Auswölbung auf der Frontseite eine andere Einbautiefe als die Auswölbung auf der Rückseite aufweist. Vorzugsweise kann je nach Einbaulage eine unterschiedliche Einbau- und/oder Aufbauhöhe realisiert werden.

Eine weitere zweckmäßige Ausgestaltung wird erreicht, wenn der Auslass ein Schrägauslass ist. Ein Schrägauslass weist insbesondere eine Auslassrichtung auf, die schräg zu einer Normalen der Sockelebene liegt.

Vorzugsweise umfasst die Abdeckung wenigstens eine Befestigungsvorrichtung, die auf der Front- und auf der Rückseite zumindest näherungsweise zur Sockelebene, insbesondere bündig mit dem Sockelelement, ausgestaltet ist. Eine Befestigungsvorrichtung ist beispielsweise ein Loch oder eine Lasche. Im Falle eines Loches wird jeweils insbesondere ein Stift oder eine Schraube zur Befestigung verwendet. Des Weiteren kann auch eine Klammer oder ein anderes Befestigungsmittel verwendet werden. Eine oder mehrere Befestigungsvorrichtungen sind vorzugsweise in einer Symmetrie im Bezug auf einen Tragring der Anschlussvorrichtung angeordnet. Vorzugsweise ist die Abdeckung in verschiedenen Positionen auf der Anschlussvorrichtung anbringbar. Beispielsweise kann eine Abdeckung mit einem quadratischen Querschnitt in verschiedenen Winkelpositionen im Bezug auf eine Normale zur Sockelebene angebracht werden. Insbesondere kann eine Drehung um 90° oder/und 180° erfolgen. Für andere Grundformen der Abdeckung können entsprechend andere Drehsymmetrien berücksichtigt werden. Zur Verstärkung der Abdeckung im Bereich einer Befestigungsvorrichtung weist die Abdeckung in diesem Bereich bevorzugt eine höhere Materialstärke auf. Besonders bevorzugt kann ein Kragen zur Aufnahme eines versenkbaren Schraubenkopfes aus der Sockelebene hervortreten.

Eine weitere Verbesserung der Funktionalität lässt sich insbesondere dadurch erzielen, dass eine Abdeckung wenigstens eine Adapterplatte umfasst, die zwischen der Anschlussvorrichtung und der Abdeckung angebracht ist. Vorzugsweise handelt es sich um eine an sich bekannte Adapterplatte. Eine Adapterplatte wird beispielsweise zur Anpassung verschiedener Grundformen der Anschlussvorrichtung und der Abdeckung verwendet. Beispielsweise wird eine Adapterplatte zur Anbringung einer runden Abdeckung auf einer eckigen Anschlussvorrichtung verwendet. Entsprechend kann eine Adapterplatte für andere, insbesondere für die vorgenannten Grundformen verwendet werden. Des Weiteren erleichtert eine Adapterplatte vorzugsweise eine bündige beziehungsweise formschlüssige Anbringung einer Abdeckung auf einer Anschlussvorrichtung. Eine Adapterplatte ist vorzugsweise aus einem gleichen Material wie die Abdeckung gefertigt.

Zur Befestigung der Abdeckung ist beispielsweise vorgesehen, dass sie mit der Anschlussvorrichtung, insbesondere einem Tragring der Anschlussvorrichtung, insbesondere reversibel lösbar verschraubbar ist. Für eine Verschraubung wird dabei insbesondere auf eine vorgenannte Befestigungsvorrichtung zurückgegriffen.

In einer besonders zweckmäßigen Ausgestaltung umfasst die Abdeckung wenigstens ein insbesondere reversibel lösbares Abdeckelement zur Abdeckung einer Verschraubung. Eine Abdeckung ist dabei beispielsweise platten- oder kappenförmig ausgestaltet und kann insbesondere auf die Befestigungsvorrichtung aufgesteckt werden. Vorzugsweise erfolgt eine formschlüssige Verbindung beispielsweise mit Hilfe von Verrastmitteln. Für eine nicht reversibel lösbare Abdeckung kann beispielweise auch eine Klebeverbindung vorgesehen werden.

In einer weiteren Ausgestaltung ist für eine Befestigung der Abdeckung vorgesehen, dass die Abdeckung mit der Anschlussvorrichtung, insbesondere einem Tragring der Anschlussvorrichtung, mittels Verrastmitteln insbesondere wiederholbar lösbar verbindbar ist. Dazu sind bevorzugt eine oder mehrere Federlaschen an der Abdeckung befestigt, die weiter bevorzugt in den Tragring einrasten können. Besonders bevorzugt kann auch vorgesehen werden, dass die Abdeckung am Randbereich von wenigstens einer Lasche der Anschlussvorrichtung gehalten wird. Des Weiteren kann insbesondere auch ein Befestigungsmittel vorgesehen werden, welches weder mit der Abdeckung noch mit der Anschlussvorrichtung körperlich verbunden ist. Beispielsweise kann ein Klammerelement zwischen Abdeckung und Befestigungsvorrichtung eingesetzt werden, um beide Teile miteinander zu verspannen.

Eine besonders zweckmäßige Auslassrichtung des Auslasses wird erzielt, wenn eine Auslassrichtung des Auslasses einen Winkel zwischen 0° und 90°, insbesondere für einen Schrägauslass bevorzugt zwischen 15° und 75° und besonders bevorzugt zwischen 30° und 60° zu einer Normalen der Sockelebene bildet. Ein Winkel von 0° ist dabei beispielsweise zur Erzielung unterschiedlicher Einbautiefen bzw. Aufbauhöhen vorgesehen. Ein Winkel von 90° wird beispielsweise dadurch erzielt, dass ein knieförmiger Durchlass in einer Auswölbung gebildet wird. Eine Auslassrichtung verläuft in diesem Falle parallel zur Sockelebene. Prinzipiell sind auch Auslassrichtungen mit einem Winkel größer 90°, zumindest geringfügig, möglich. In diesem Fall bildet ein knieförmiger Auslass eine Auslassrichtung, welche in einem Winkel auf die Sockelebene gerichtet ist.

Weiter bevorzugt ist vorgesehen, dass die Abdeckung wenigstens einen Einsatz umfasst, der in den Auslass insbesondere wiederholbar lösbar einsteckbar ist. Ein Einsatz ist beispielsweise in etwa quaderförmig ausgestaltet und stellt insbesondere einen Adapter zwischen der Abdeckung und einem Anschlusselement dar. Der Einsatz kann beispielsweise kraft- oder formschlüssig mit der Abdeckung verbunden werden. Insbesondere ist ein Verrastelement zur Befestigung vorgesehen. Beispielsweise umfasst der Einsatz wenigstens eine Verrastlasche. Des Weiteren kann der Einsatz beispielsweise auch mittels wenigsten einer Verschraubung in der Abdeckung befestigt werden.

Vorzugsweise umfasst der Einsatz wenigsten ein Anschlusselement, insbesondere einer Datenübertragungsverbindung. Ein Anschlusselement ist dabei insbesondere ein Stecker oder eine Buchse. Bevorzugt ist ein Anschlusselement für eine elektrische oder optische Verbindung vorgesehen. Besonders bevorzugt lassen sich verschiedene Anschlusselemente in einem Einsatz unterbringen.

In einer bevorzugten Ausgestaltung ist vorgesehen, dass ein wirksamer Querschnitt des Auslasses ein in einer Auslassrichtung gebildete mehrzählige Symmetrieachse aufweist. Ein rechteckiger Querschnitt weist beispielsweise eine zweizählige Symmetrieachse auf. Ein quadratischer Querschnitt weist beispielsweise eine vierzählige Symmetrieachse auf. Ein wirksamer Querschnitt ist dabei ein bezogen auf einen in den Ausschnitt hineinzusteckenden Einsatz in Betracht zu ziehender Querschnitt. Ein quadratischer Querschnitt kann beispielsweise an einer Ecke eine Ausbohrung aufweisen, so dass er keine mehrzählige Symmetrieachse aufweist, wird jedoch hier in Bezug auf einen quadratischen Einsatz als wirksamer quadratischer Querschnitt aufgefasst. Entsprechende Überlegungen gelten für andere Brüche der Symmetrie.

Besonders vorteilhaft ist ein Einsatz in verschiedenen Drehwinkeln um die Symmetrieachse in den Auslass einsteckbar. Der Einsatz ist dabei insbesondere wiederholbar lösbar einsteckbar, so dass eine Einbaulage insbesondere je nach Anwendungsfall modifiziert werden kann.

In einer weiteren Ausgestaltung ist vorgesehen, dass der Auslass wenigstens zwei Segmente umfasst. Beispielsweise ist der Auslass in gleichgroße vorzugsweise parallel nebeneinander angeordnete Segmente unterteilt. In einer weiteren Ausgestaltung können auch verschieden große Segmente vorgesehen werden. Insbesondere können verschiedene Segmente für verschiedene Einsätze vorgesehen werden.

Eine weitere Verbesserung der Funktion lässt sich erzielen, wenn die Abdeckung, insbesondere jeweils auf der Front- und der Rückseite, wenigstens ein Kennzeichnungselement umfasst. Ein Kennzeichnungselement enthält beispielsweise eine fest vorgegebene oder eine veränderbare Information. Beispielsweise handelt es sich um eine vorzugsweise plane, beschriftbare Fläche. Des Weiteren kann ein Kennzeichnungselement auch eine Markierung aufweisen. Beispielsweise ist ein Kennzeichnungselement ein Aufkleber.

Besonders zweckmäßig ist das Kennzeichnungselement reversibel lösbar mit der Abdeckung verbunden. Insbesondere bildet das Kennzeichnungselement eine eigenständige Einheit, die vorzugsweise je nach Anwendungsfall unterschiedlich auf der Abdeckung platziert werden kann. Beispielsweise handelt es sich um ein vorzugsweise längs erstrecktes Beschriftungsfeld. Bevorzugt ist ein Kennzeichnungselement mit einem Abdeckelement zur Abdeckung einer Verschraubung körperlich verbunden oder zumindest verbindbar. Besonders bevorzugt ist vorgesehen, dass das Kennzeichnungselement je nach Einbaulage der Abdeckung sowohl auf der Front- als auch auf der Rückseite angebracht werden kann.

In einer weiteren zweckmäßigen Ausgestaltung umfasst der Auslass der Abdeckung wenigstens ein Verschließelement. Vorzugsweise ist ein Verschließelement als Schieber oder Klappe ausgestaltet. Insbesondere kann ein Federelement vorgesehen werden, um beispielsweise ein selbsttätiges Schließen zu gewährleisten.

Im Folgenden wird die Erfindung anhand der Zeichnung in mehreren Beispielen erläutert. Die Merkmale sind dort jeweils jedoch nicht auf die jeweiligen Ausgestaltungen beschränkt. Vielmehr sind jeweils in der Zeichnung oder/und in der Beschreibung einschließlich der Figurenbeschreibung angegebene Merkmale jeweils zu Weiterbildungen kombinierbar.

Es zeigen:
- Figur 1:: Eine Anordnung einer ersten Abdeckung in einer Telekommunikationsinstallation.
- Figur 2:: Eine erste Abdeckung.
- Figur 3:: Einen Querschnitt der ersten Abdeckung.
- Figur 4:: Einen Querschnitt einer zweiten Abdeckung.
- Figuren 5 - 12:: Verschiedene Einbauvarianten einer Abdeckung mit einem Einsatz.
- Figur 13:: Eine vierte Abdeckung.
- Figur 14:: Eine fünfte Abdeckung.

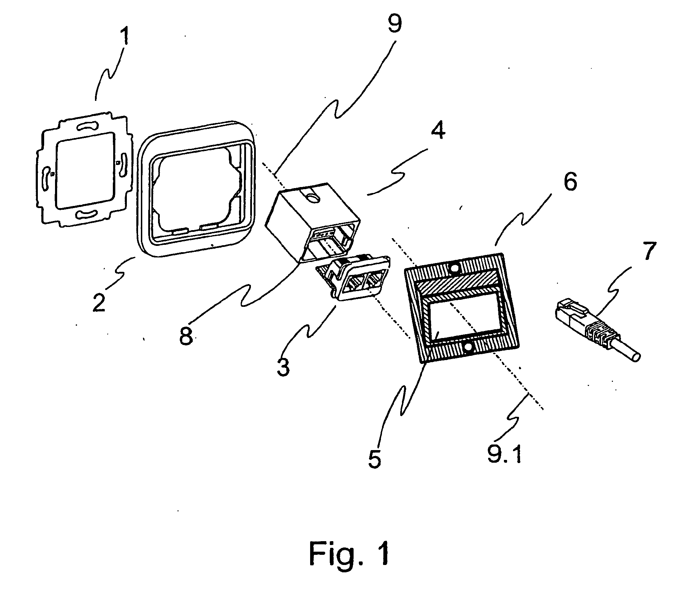

Fig. 1 zeigt eine Anordnung einer Abdeckung einer Telekommunikationsinstallation. Die Anordnung umfasst einen Tragring 1, der beispielsweise vor einer hier nicht dargestellten Auslassöffnung eines hier ebenfalls nicht dargestellten Kabelkanals angebracht ist sowie eine Adapterplatte 2. Zur Integration eines Anschlusselementes 3 ist ein Einsatz 4 vorgesehen, der in einen Schrägauslass 5 einer ersten Abdeckung 6 eingesteckt werden kann. Des Weiteren ist ein Stecker 7 vorgesehen, der in das Anschlusselement 3 eingesteckt werden kann. Bei einer Montage wird das Anschlusselement 3 in den Einsatz 4 eingesteckt, welcher wiederum in den Schrägauslass 5 eingesteckt wird. Anschließend wird die Adapterplatte 2 auf den Tragring 1 gesetzt und mit der auf die Adapterplatte 2 gesetzten ersten Abdeckung 6 mittels hier nicht dargestellter Schrauben befestigt. Eine Querschnittsfläche 8 des Einsatzes weist dabei eine erste Symmetrieachse 9 bezüglich einer Drehung auf. Der Schrägauslass 5 weist entsprechend eine zweite Symmetrieachse 9.1 auf. Aufgrund der gegebenen Symmetrie kann der Einsatz 4 insbesondere auch um 180° um seine Symmetrieachse gedreht in den Schrägauslass 5 eingesetzt werden.

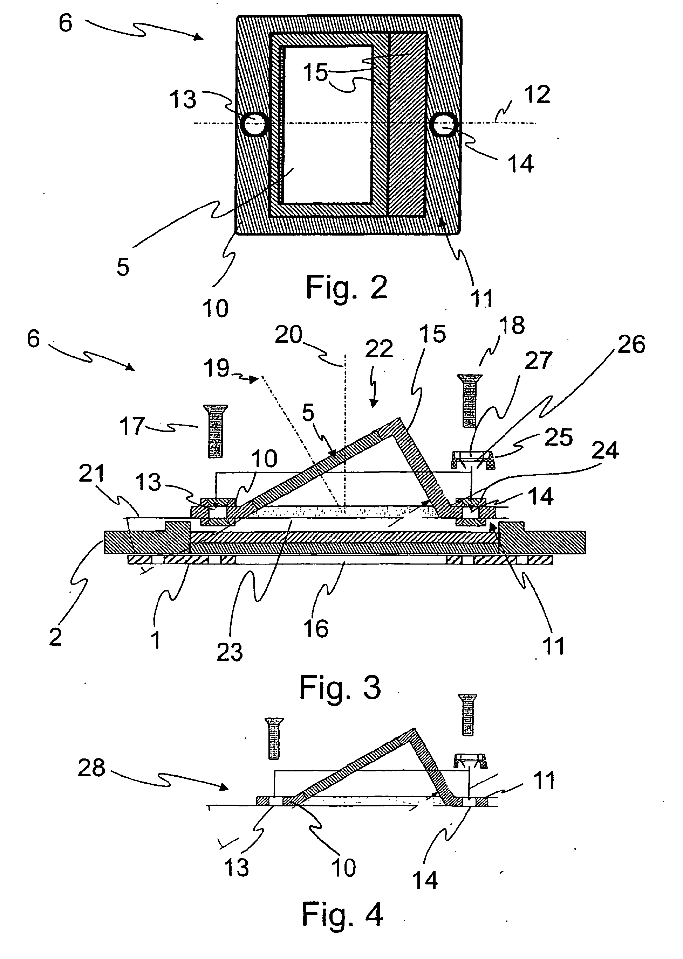

Fig. 2 zeigt eine erste Abdeckung.

Im Folgenden werden gleichwirkende Bauelemente mit den gleichen Bezugszeichen und Bezeichnungen versehen.

Die erste Abdeckung 6 ist in der Abbildung in einer Aufsicht dargestellt. Die erste Abdeckung 6 umfasst ein Sockelelement 10, welches gleichzeitig einen äußeren Befestigungsrandbereich 11 bildet. Entlang einer dritten Symmetrieachse 12 sind auf dem äußeren Befestigungsrandbereich 11 ein erstes 13 und ein zweites Befestigungsloch 14 vorgesehen. Innerhalb des äußeren Befestigungsrandbereiches 11 weist die erste Abdeckung 6 eine pultfömige Auswölbung 15 auf, die zur Bildung eines Schrägauslasses 5 durchbrochen ist. Eine Querschnittsebene des Schrägauslasses 5 ist in diesem Beispiel um 30° zur Zeichnungsebene geneigt.

Fig. 3 zeigt einen Querschnitt der in der vorstehenden Abbildung gezeigten ersten Abdeckung 6. Der gezeigte Schnitt verläuft hierbei längs der in der vorstehenden Figur gezeigten dritten Symmetrieachse senkrecht zur dortigen Zeichnungsebene. Auf einem Tragring 1, der eine Zentralaussparung 16 umfasst, ist eine Adapterplatte 2 angeordnet. Mittels einer ersten 17 und einer zweiten Schraube 18 ist die erste Abdeckung 6 durch das erste 13 und das zweite Befestigungsloch 14 mit dem Tragring 1 verbindbar. Zur Bildung eines Schrägauslasses 5 ist eine pultdachförmige Auswölbung 15 entsprechend durchbrochen. Der Schrägauslass 5 bildet hierbei eine Auslassrichtung 19 in einem Winkel von 30° zu einer Normalen 20 zu einer Sockelebene 21. Der äußere Befestigungsrandbereich 11 des Sockelelementes 10 umfasst jeweils auf einer Frontseite 22 und einer Rückseite 23 eine zylindrische Verstärkung 24 mit einer Versenkung zur Aufnahme eines Schraubenkopfes. In einer Abwandlung kann anstelle der zylindrischen Verstärkung 24 auch jeweils eine auf dem äußeren Befestigungsrandbereich 11 umlaufende Verstärkung verwendet werden. Des Weiteren ist ein Kennzeichnungselement 25 vorgesehen, welches beispielsweise hier auf das zweite Befestigungsloch 14 aufgesetzt werden kann, um mit der zweiten Schraube 18 befestigt zu werden. Dieses Kennzeichnungselement 25 ist senkrecht zur Papierebene längs erstreckt und umfasst ein Beschriftungsfeld 26, welches mit einer Klarsichtabdeckung 27 abdeckbar ist. Die Klarsichtabdeckung 27 und das Beschriftungsfeld 26 sind insbesondere auswechselbar ausgestaltet.

Fig. 4 zeigt einen Querschnitt einer zweiten Abdeckung 28. Die zweite Abdeckung 28 entspricht im Wesentlichen der ersten Abdeckung der vorstehenden Fig. 3, wobei in diesem Fall in einem äußeren Befestigungsrandbereich 11 eines Sockelelementes 10 auf einer Materialverstärkung im Bereich des ersten 13 und zweiten Befestigungsloches 14 verzichtet wurde. Eine ausreichende Stabilität im Bereich der Befestigungslöcher wird beispielsweise durch eine entsprechende Dimensionierung des Sockels 10 sichergestellt. Des Weiteren kann eine ausreichende Stabilität insbesondere auch durch eine geeignete Materialauswahl gewährleistet werden.

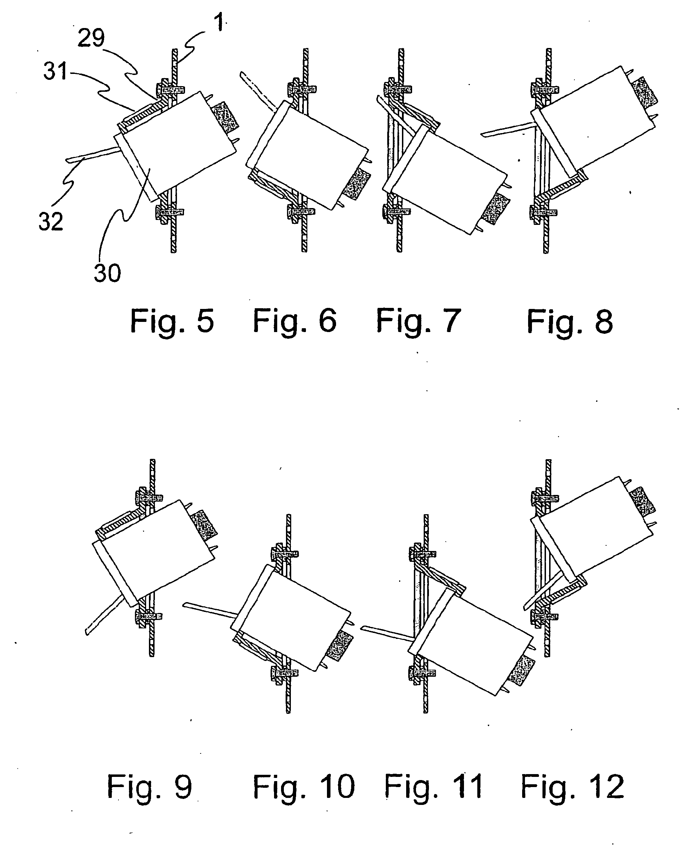

Die Fig. 5 bis 12 zeigen jeweils verschiedene Einbauvarianten einer Abdeckung mit einem Einsatz. Fig. 5 zeigt eine dritte Abdeckung 29 mit einem zweiten Einsatz 30 auf einem Tragring 1. Die dritte Abdeckung 29 ist mit einem Beschriftungsfeld 31 versehen. Des Weiteren enthält der zweite Einsatz 30 eine hier in geöffneter Position dargestellte Verschlussklappe 32. Zum Schließen müsste die Verschlussklappe 32 entgegen dem Uhrzeigersinn um etwa 100° gegen den zweiten Einsatz 30 geklappt werden.

In Fig. 5 und in folgenden bis auf Fig. 12 befindet sich jeweils links vom Tragring 1 eine einem Nutzer zugängliche Seite und rechts vom Tragring 1 eine hier nicht dargestellte elektrische oder eine Telekommunikationsinstallation, beispielsweise auf einem Kanal einer Hausinstallation. Der zweite Einsatz 30 ist dabei insbesondere um 180° um eine Längsrichtung zur Papierebene drehbar. Zur besseren Übersichtlichkeit ist in Fig. 5 und in den folgenden Figuren bis zur Fig. 12 eine Adapterplatte nicht eingezeichnet. Diese kann zusätzlich zwischen dem Tragring 1 und der dritten Abdeckung 29 eingesetzt werden. Im Folgenden wird der Abschnitt links des Tragringes mit "außen" und der rechts des Tragringes 1 mit "innen" bezeichnet. Entsprechend der verschiedenen Kombinationsmöglichkeiten - Beschriftungsfeld 31 nach oben oder unten zeigend, dritte Abdeckung 29 nach innen oder außen zeigend und Verschlussklappe 32 des zweiten Einsatzes nach oben oder unten öffnend - sind acht verschiedenen Kombinationsmöglichkeiten in Fig. 5 und in den Fig. 6 bis 12 dargestellt. Zusätzlich zu der hier dargestellten Variante kann der zweite Einsatz 30 auch so ausgestaltet sein, dass er einen quadratischen Querschnitt aufweist, so dass er nicht nur um 180° gedreht um seine Längsachse in den Schrägauslass der Abdeckung eingelassen werden kann, sondern auch jeweils um 90° gedreht in diesen eingesteckt werden kann. Dadurch erhöht sich die Anzahl der möglichen Kombinationen noch einmal.

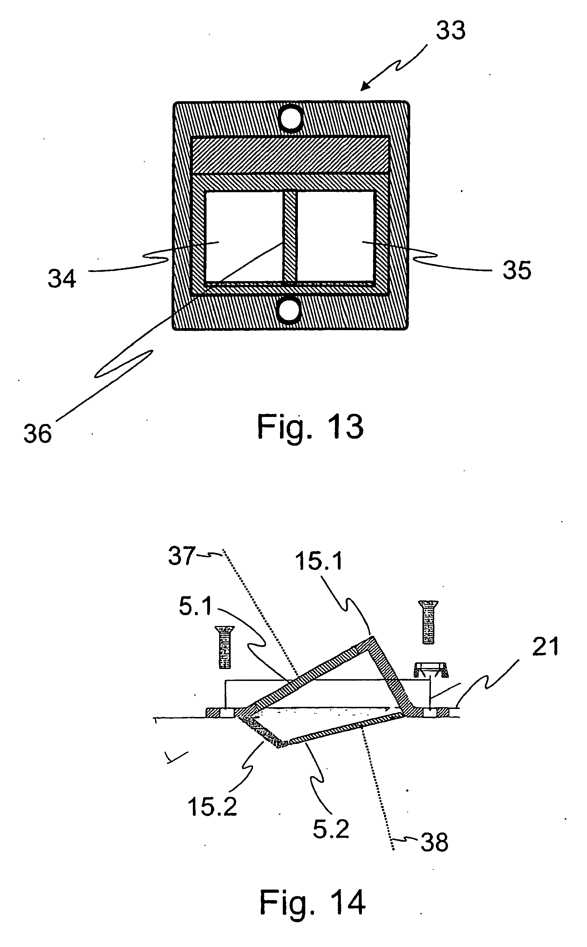

Fig. 13 zeigt eine vierte Abdeckung 33. Diese vierte Abdeckung 33 entspricht im Wesentlichen der in Fig. 2 oben gezeigten ersten Abdeckung. Der Schrägauslass umfasst hierbei jedoch ein erstes 34 und ein zweites Segment 35, welche durch einen Mittelsteg 36 voneinander getrennt sind. Das erste 34 und das zweite Segment 35 weisen in diesem Fall identische Abmessungen auf, sodass zwei gleichartige Einsätze, die hier nicht dargestellt sind, aufgenommen werden können.

Figur 14 zeigt eine fünfte Abdeckung. Diese fünfte Abdeckung entspricht im Sockelbereich im Wesentlichen der in Fig. 4 gezeigten Abdeckung. Im Unterschied dazu weist die fünfte Abdeckung jedoch eine obere Auswölbung 15.1 und eine untere Auswölbung 15.2 auf. Diese weisen einen oberen Auslass 5.1 und einen unteren Auslass 5.2 auf. Aufgrund unterschiedlicher Höhen der Auswölbungen 15.1 und 15.2 aus der Sockelebene 21 lassen sich je nach Einbaulage unterschiedliche Aufbauhöhen bzw. Einbautiefen verwirklichen. Des weiteren weisen der obere Auslass 5.1 und der untere Auslass 5.2 unterschiedliche Auslassrichtungen von oberer Auslassrichtung 37 und unterer Auslassrichtung 38 auf. Entgegen der hier gezeigten pultförmigen Auswölbungen kann eine derartige Abdeckung auch mit kugelkappenförmigen, sphärischen Auswölbungen oder allgemein unregelmäßigen Auswölbungen sowie einer Kombination derselbigen verwirklicht werden.

## Patentansprüche

1. Abdeckung (6) einer Anschlussvorrichtung, insbesondere einer Anschlussdose für eine elektrische oder eine Telekommunikationsinstallation, wobei die Abdeckung (6) eine Front- (22) und eine Rückseite (23) umfasst, wenigstens an einem Rand ein Sockelelement (10) bildet, welches in einer Sockelebene (21) liegt, und wenigstens einen Auslass (5) umfasst, der aus wenigstens einer aus der Sockelebene (21) heraustretenden durchbrochenen Auswölbung (15) der Abdeckung (6) gebildet ist, **dadurch gekennzeichnet, dass** die Abdeckung (6) sowohl mit der Frontseite (22) als auch mit der Rückseite (23) auf der Anschlussvorrichtung, insbesondere einem Tragring (1) und/oder einer Adapterplatte (2) der Anschlussvorrichtung, zumindest mit dem Sockelelement (10) bündig anbringbar ist.

2. Abdeckung (6) nach Anspruch 1, **dadurch gekennzeichnet, dass** die Auswölbung (15) innerhalb eines von einem äußeren Befestigungsrandbereich (11) des Sockelelementes (10) begrenzten Gebietes liegt.

3. Abdeckung (6) nach Anspruch 1 oder 2, **dadurch gekennzeichnet, dass** sie sowohl auf der Frontseite als auch auf der Rückseite wenigstens eine aus der Sockelebene (21) hervortretende Auswölbung (15.1; 15.2) mit jeweils wenigstens einem Auslass (5.1; 5.2) umfasst.

4. Abdeckung nach Anspruch 3, **dadurch gekennzeichnet, dass** die Auswölbung (15.1) auf der Frontseite eine andere Einbautiefe als die Auswölbung (15.2) auf der Rückseite aufweist.

5. Abdeckung nach einem der vorhergehenden Ansprüche, **dadurch gekennzeichnet, dass** der Auslass (5) ein Schrägauslass (5) ist.

6. Abdeckung (6) nach einem der vorhergehenden Ansprüche, **dadurch gekennzeichnet, dass** sie wenigstens eine Befestigungsvorrichtung umfasst, die auf der Front- (22) und der Rückseite (23) zumindest näherungsweise symmetrisch zur Sockelebene (21), insbesondere bündig mit dem Sockelelement (10), ausgestaltet ist.

7. Abdeckung (6) nach einem der vorhergehenden Ansprüche, **dadurch gekennzeichnet, dass** sie wenigstens eine Adapterplatte (2) umfasst, die zwischen der Anschlussvorrichtung und der Abdeckung (6) angebracht ist.

8. Abdeckung (6) nach einem der vorhergehenden Ansprüche, **dadurch gekennzeichnet, dass** sie mit der Anschlussvorrichtung, insbesondere einem Tragring (1) der Anschlussvorrichtung, insbesondere reversibel lösbar verschraubbar ist.

9. Abdeckung (6) nach einem der vorhergehenden Ansprüche, **dadurch gekennzeichnet, dass** sie wenigstens ein insbesondere reversibel lösbares Abdeckelement zur Abdeckung einer Verschraubung umfasst.

10. Abdeckung (6) nach einem der vorhergehenden Ansprüche, **dadurch gekennzeichnet, dass** sie mit der Anschlussvorrichtung, insbesondere einem Tragring (1) der Anschlussvorrichtung, mittels Verrastemitteln insbesondere wiederholbar lösbar verbindbar ist.

11. Abdeckung (6) nach einem der vorhergehenden Ansprüche, **dadurch gekennzeichnet, dass** eine Auslassrichtung (19) des Auslasses (5) einen Winkel zwischen 0° und 90°, bevorzugt zwischen 15° und 75° und besonders bevorzugt zwischen 30° und 60° zu einer Normalen (20) der Sockelebene (21) bildet.

12. Abdeckung (6) nach einem der vorhergehenden Ansprüche, **dadurch gekennzeichnet, dass** sie wenigstens einen Einsatz (4) umfasst, der in den Auslass (5) insbesondere wiederholbar lösbar einsteckbar ist.

13. Abdeckung (6) nach Anspruch 9, **dadurch gekennzeichnet, dass** der Einsatz (4) wenigstens ein Anschlusselement (3) einer Datenübertragungsverbindung umfasst.

14. Abdeckung (6) nach einem der vorhergehenden Ansprüche, **dadurch gekennzeichnet, dass** ein wirksamer Querschnitt des Auslasses (5) eine in einer Auslassrichtung (19) gebildete mehrzählige Symmetrieachse aufweist.

15. Abdeckung (6) nach Anspruch 14, **dadurch gekennzeichnet, dass** ein Einsatz (4) in verschiedenen Drehwinkeln um die Symmetrieachse in den Auslass (5) einsteckbar ist.

16. Abdeckung (6) nach einem der vorhergehenden Ansprüche, **dadurch gekennzeichnet, dass** der Auslass (5) wenigstens zwei Segmente umfasst.

17. Abdeckung (6) nach einem der vorhergehenden Ansprüche, **dadurch gekennzeichnet, dass** die Abdeckung (6) wenigstens einen weiteren Auslass, insbesondere wenigstens einen weiteren Schrägauslass (5) umfasst.

18. Abdeckung (6) nach einem der vorhergehenden Ansprüche, **dadurch gekennzeichnet, dass** sie, insbesondere jeweils auf der Front- (22) und der Rückseite (23), wenigstens ein Kennzeichnungselement umfasst.

19. Abdeckung (6) nach Anspruch 18, **dadurch gekennzeichnet, dass** das Kennzeichnungselement reversibel lösbar mit der Abdeckung (6) verbunden ist.

20. Abdeckung (6) nach einem der vorhergehenden Ansprüche, **dadurch gekennzeichnet, dass** der Auslass (5) wenigstens ein Verschließelement umfasst.

## Claims

1. A cover (6) for a connection device, in particular a connection box for an electric or a telecommunications installation, the covering means (6) comprising a front side (22) and a rear side (23), forming a base element (10) at least on one edge, which element lies in a base plane (21), and comprising at least one outlet (5) which is formed from at least one broken-through outward protuberance (15) of the covering means (6) emerging from the base plane (21), **characterised in that** the covering means (6) can be attached, both with the front side (22) and with the rear side (23), flush to the connection device, in particular a support ring (1) and/or an adapter plate (2) of the connection device, at least with the base element (10).

2. A cover (6) according to Claim 1, **characterised in that** the outward protuberance (15) is located inside an area defined by an outer fastening edge region (11) of the base element (10).

3. A cover (6) according to Claim 1 or 2, **characterised in that** it comprises both on the front side and on the rear side at least one outward protuberance (15.1; 15.2), with in each case at least one outlet (5.1; 5.2), which protrudes out of the base plane (21).

4. A cover according to Claim 3, **characterised in that** the outward protuberance (15.1) on the front side has a different installation depth from the outward protuberance (15.2) on the rear side.

5. A cover according to one of the preceding claims, **characterised in that** the outlet (5) is an inclined outlet (5).

6. A cover (6) according to one of the preceding claims, **characterised in that** it comprises at least one fastening device which is formed on the front side (22) and the rear side (23) at least approximately symmetrically to the base plane (21), in particular flush with the base element (10).

7. A cover (6) according to one of the preceding claims, **characterised in that** it comprises at least one adapter plate (2) which is attached between the connection device and the cover (6).

8. A cover (6) according to one of the preceding claims, **characterised in that** it can be screw-connected to the connection device, in particular a support ring (1) of the connection device, in particular in reversibly detachable manner.

9. A cover (6) according to one of the preceding claims, **characterised in that** it comprises at least one in particular reversibly detachable covering element for covering a screw connection.

10. A cover (6) according to one of the preceding claims, **characterised in that** it can be connected to the connection device, in particular a support ring (1) of the connection device, in particular in repeatedly detachable manner, by means of engagement means.

11. A cover (6) according to one of the preceding claims, **characterised in that** one outlet direction (19) of the outlet (5) forms an angle of between 0° and 90°, preferably between 15° and 75°, and particularly preferably between 30° and 60°, to a line normal (20) to the base plane (21).

12. A cover (6) according to one of the preceding claims, **characterised in that** it comprises at least one insert (4) which can be inserted, in particular in repeatedly detachable manner, into the outlet (5).

13. A cover (6) according to Claim 9, **characterised in that** the insert (4) comprises at least one connection element (3) for a data transfer connection.

14. A cover (6) according to one of the preceding claims, **characterised in that** an effective cross-section of the outlet (5) has a multiple axis of symmetry formed in one outlet direction (19).

15. A cover (6) according to Claim 14, **characterised in that** an insert (4) can be inserted into the outlet (5) in different angles of rotation about the axis of symmetry.

16. A cover (6) according to one of the preceding claims, **characterised in that** the outlet (5) comprises at least two segments.

17. A cover (6) according to one of the preceding claims, **characterised in that** the cover (6) comprises at least one further outlet, in particular at least one further inclined outlet (5).

18. A cover (6) according to one of the preceding claims, **characterised in that** it comprises at least one marking element, in particular in each case on the front side (22) and the rear side (23).

19. A cover (6) according to Claim 18, **characterised in that** the marking element is connected reversibly detachably to the cover (6).

20. A cover (6) according to one of the preceding claims, **characterised in that** the outlet (5) comprises at least one closing element.

## Revendications

1. Couvercle (6) pour un dispositif de raccordement, en particulier pour une prise de raccordement pour une installation électrique ou de télécommunications, le couvercle (6) comprenant une face frontale (22) et une face arrière (23), formant au moins sur un bord un élément de socle (10) situé dans un plan de socle (21), et au moins une sortie (5) qui est formée par au moins une cambrure (15) percée du couvercle (6) faisant saillie du plan de socle (21), **caractérisé en ce que** le couvercle (6) peut être fixé à fleur au moins avec l'élément de socle (10) aussi bien par la face frontale (22) que par la face arrière (23) sur le dispositif de raccordement, en particulier une bague de support (1) et/ou une plaque d'adaptation (2) du dispositif de raccordement.

2. Couvercle (6) selon la revendication 1, **caractérisé en ce que** la cambrure (15) est située dans une région délimitée par une zone de bord de fixation extérieure (11) de l'élément de socle (10).

3. Couvercle (6) selon la revendication 1 ou 2, **caractérisé en ce qu'**il comprend aussi bien sur la face frontale que sur la face arrière au moins une cambrure (15.1 ; 15.2) faisant saillie du plan de socle (21) avec respectivement au moins une sortie (5.1 ; 5.2).

4. Couvercle selon la revendication 3, **caractérisé en ce que** la cambrure (15.1) sur la face frontale présente une autre profondeur de montage que la cambrure (15.2) sur la face arrière.

5. Couvercle selon l'une quelconque des revendications précédentes, **caractérisé en ce que** la sortie (5) est une sortie oblique (5).

6. Couvercle (6) selon l'une quelconque des revendications précédentes, **caractérisé en ce qu'**il comprend au moins un dispositif de fixation qui est formé sur les faces frontale (22) et arrière (23) au moins approximativement symétrique par rapport au plan de socle (21), en particulier à fleur de l'élément de socle (10).

7. Couvercle (6) selon l'une quelconque des revendications précédentes, **caractérisé en ce qu'**il comprend au moins une plaque d'adaptation (2) disposée entre le dispositif de raccordement et le couvercle (6).

8. Couvercle (6) selon l'une quelconque des revendications précédentes, **caractérisé en ce qu'**il peut être vissé, en particulier de façon amovible et réversible, avec le dispositif de raccordement, en particulier une bague de support (1) du dispositif de raccordement.

9. Couvercle (6) selon l'une quelconque des revendications précédentes, **caractérisé en ce qu'**il comprend au moins un élément de couvercle en particulier amovible de façon réversible pour recouvrir un vissage.

10. Couvercle (6) selon l'une quelconque des revendications précédentes, **caractérisé en ce qu'**il peut être relié au dispositif de raccordement, en particulier une bague de support (1) du dispositif de raccordement, à l'aide de moyens d'encliquetage, en particulier de façon amovible plusieurs fois.

11. Couvercle (6) selon l'une quelconque des revendications précédentes, **caractérisé en ce qu'**une direction de sortie (19) de la sortie (5) forme un angle entre 0° et 90°, de préférence entre 15° et 75° et en particulier de préférence entre 30° et 60° par rapport à une normale (20) du plan de socle (21).

12. Couvercle (6) selon l'une quelconque des revendications précédentes, **caractérisé en ce qu'**il comprend au moins un insert (4) qui peut être placé dans la sortie (5), en particulier de façon amovible plusieurs fois.

13. Couvercle (6) selon la revendication 9, **caractérisé en ce que** l'insert (4) comprend au moins un élément de raccordement (3) pour une liaison de transmission de données.

14. Couvercle (6) selon l'une quelconque des revendications précédentes, **caractérisé en ce qu'**une section transversale efficace de la sortie (5) présente un axe de symétrie en plusieurs parties formé dans une direction de sortie (19).

15. Couvercle (6) selon la revendication 14, **caractérisé en ce qu'**un insert (4) peut être enfoncé dans la sortie (5) sous différents angles de rotation autour de l'axe de symétrie.

16. Couvercle (6) selon l'une quelconque des revendications précédentes, **caractérisé en ce que** la sortie (5) comprend au moins deux segments.

17. Couvercle (6) selon l'une quelconque des revendications précédentes, **caractérisé en ce que** le couvercle (6) comprend au moins une autre sortie, en particulier au moins une autre sortie oblique (5).

18. Couvercle (6) selon l'une quelconque des revendications précédentes, **caractérisé en ce qu'**il présente, en particulier respectivement sur les faces frontale (22) et arrière (23), au moins un élément d'identification.

19. Couvercle (6) selon la revendication 18, **caractérisé en ce que** l'élément d'identification est relié au couvercle (6) de façon amovible et réversible.

20. Couvercle (6) selon l'une quelconque des revendications précédentes, **caractérisé en ce que** la sortie (5) comprend au moins un élément de fermeture.
